# FASCICULE DE BREVET EUROPEEN

(11) **EP 3 947 040 B1**
(45) Date de publication et mention de la délivrance du brevet: **12.07.2023**
(21) Numéro de dépôt: 20728116.3
(22) Date de dépôt: 19.03.2020
(51) Int. Cl.: B60Q 1/26, B60R 19/02, B60R 19/24, B60R 19/48, B60R 19/18

(54) **DISPOSITIF ET PROCÉDÉ DE MONTAGE ISOSTATIQUE SUR LA CAISSE D'UN VÉHICULE AUTOMOBILE, D'UN PROJECTEUR LUMINEUX ET D'UN PARECHOC MONTÉS SUR UN SUPPORT COMMUN**
VORRICHTUNG UND VERFAHREN ZUR ISOSTATISCHEN MONTAGE EINES SCHEINWERFERS UND EINES AUF EINEM GEMEINSAMEN TRÄGER MONTIERTEN STOSSFÄNGERS AM KRAFTFAHRZEUGKÖRPER
DEVICE AND METHOD FOR THE ISOSTATIC MOUNTING OF A HEADLAMP AND A BUMPER, MOUNTED ON A COMMON SUPPORT, ON THE BODY OF A MOTOR VEHICLE

(30) Priorité: 29.03.2019 FR 1903354
(43) Date de publication de la demande: 09.02.2022
(73) Titulaire: PSA Automobiles SA, 78300 Poissy (FR)
(72) Inventeur: BRIAND, Sebastien, 78770 AUTEUIL (FR)
(86) Numéro de dépôt international: PCT/FR2020/050596
(87) Numéro de publication internationale: WO 2020/201659

(56) Documents cités:
- EP-A1- 0 768 206
- WO-A1-02/22396
- WO-A1-2009/040622
- DE-A1-102014 005 060
- FR-A1- 2 857 645
- US-A1- 2003 179 588

## Description

### Domaine technique de l'invention

La présente invention revendique la priorité de la demande française 1903354 déposée le 29 Mars 2019.

L'invention relève du domaine de l'assemblage de composants sur la caisse d'un véhicule automobile. L'invention relève plus particulièrement de l'assemblage sur la caisse d'un véhicule automobile d'un ensemble de composants comprenant un support sur lequel sont montés un projecteur et un parechoc.

### Art antérieur

Les véhicules automobiles sont classiquement équipés de projecteurs lumineux qui sont installés à l'avant et à l'arrière du véhicule, à ses côtés latéraux droit et gauche. De tels projecteurs, configurés en projecteur d'éclairage ou en feu de signalisation, comprennent essentiellement un boîtier logeant au moins une source lumineuse, un ou plusieurs dispositifs optiques générateurs d'au moins un faisceau lumineux issu de la ou des sources lumineuses, et une paroi transparente de fermeture du boîtier à travers laquelle émerge vers l'extérieur du véhicule le ou les faisceaux lumineux produits par le projecteur.

Selon une méthode de montage, le projecteur est installé sur la caisse du véhicule via un support. Le projecteur est maintenu en position sur le support, puis l'ensemble comprenant le projecteur et le support est positionné sur la caisse. Le boîtier et le support sont alors chacun individuellement fixés sur la caisse. Par ailleurs, un parechoc est couramment installé sur la caisse en contrebas du projecteur, en affleurement avec la paroi transparente du projecteur pour ne pas rompre la ligne esthétique du véhicule. Le support peut alors être exploité pour procurer un positionnement relatif entre le parechoc et le projecteur. Pour son positionnement le parechoc est installé sur le support porteur du projecteur préalablement fixés sur la caisse, puis le parechoc est fixé sur la caisse.

On connait par le document FR2857645 un bloc projecteur pour véhicule automobile. On connait par le document WO2009/040622 une structure de montage d'une lampe et un véhicule sur lequel est montée la lampe au moyen de cette structure.

Dans ce contexte il est à tenir compte des jeux de montage relatifs entre le support, le projecteur, le parechoc et la caisse, en évitant un montage hyperstatique d'un tel assemblage de composants fixés sur la caisse. Il a par exemple été proposé par le document FR 2 980 441-B1 (PEUGEOT CITROEN AUTOMOBILES), de tenir compte de telles contraintes en agençant le support en organe déformable permettant de rattraper les jeux de montage et ainsi procurer un montage isostatique sur la caisse du support, du projecteur et du parechoc.

La surface de portée du projecteur contre la caisse est déterminante sur la qualité de son maintien rigoureux en position sur le véhicule. Une telle surface de portée est ménagée par une paroi d'appui et de fixation du boîtier du projecteur contre la caisse. Ladite paroi d'appui s'étend suivant les directions transversale et verticale d'extension du véhicule en étant ménagée par le boîtier à l'extrémité du projecteur qui est longitudinalement opposée à celle via laquelle le faisceau lumineux émerge hors du projecteur. L'extension en élévation du projecteur est dès lors déterminante sur l'extension de ladite paroi d'appui et par suite sur la qualité du maintien du projecteur en position contre la caisse.

Cependant, le projecteur peut présenter une ligne esthétique de conformation allongée suivant l'extension longitudinale du véhicule, avec une faible extension en élévation de la paroi du boîtier ménageant la surface de portée du projecteur contre la caisse. Dans un tel cas, la surface de portée du projecteur contre la caisse peut être trop faible pour procurer son maintien en position pérenne et fiable sur la caisse, le projecteur pouvant alors tendre à basculer sous l'effet de son propre poids. Il en ressort que des efforts de recherche sont à mener pour résoudre ce problème.

### Présentation de l'invention

Dans ce contexte l'invention a pour objet un dispositif et un procédé de montage isostatique sur la caisse d'un véhicule automobile, d'un ensemble de composants comprenant un support sur lequel sont montés un projecteur lumineux et un parechoc. L'invention a aussi pour objet un véhicule automobile équipé d'au moins un dispositif de montage conforme à l'invention.

Le but de l'invention est de proposer une solution pour procurer un positionnement rigoureux et une fixation fiables sur la caisse des dits composants comprenant le support, le projecteur et le parechoc, et cela en évitant un montage hyperstatique sur la caisse de l'ensemble de ces composants.

Un autre but de l'invention est de proposer une telle solution qui soit compatible pour un projecteur de configuration allongée suivant l'extension longitudinale du véhicule, en présentant une extension modérée en élévation par rapport à son extension longitudinale.

Un autre but de l'invention est de proposer une telle solution à moindres coûts, dans le contexte d'une concurrence économique notoirement sévère dans le domaine automobile qui peut rendre rédhibitoire une solution potentielle en raison des coûts induits. Il est notamment recherché d'éviter de complexifier outre mesure les modalités de positionnements relatifs et de fixation sur la caisse du support, du projecteur et du parechoc, tant structurellement qu'au regard des opérations à effectuer pour leur montage sur la caisse.

Les buts visés par la présente invention sont atteints, isolément ou en combinaison, par application des dispositions qui suivent.

Un dispositif conforme à l'invention est un dispositif de montage isostatique d'au moins un ensemble de composants sur la caisse d'un véhicule automobile. La caisse s'étend suivant les trois directions d'un repère orthonormé comprenant une direction longitudinale, une direction transversale et une direction verticale. Un tel repère est communément utilisé dans le domaine automobile pour désigner l'extension du véhicule et/ou de la caisse qu'il comprend.

Les composants dudit au moins un ensemble de composants sont chacun fixés sur la caisse et comprennent un support de réception d'un projecteur lumineux et d'un parechoc, le support et le parechoc s'étendant en contrebas du projecteur. La notion de contrebas est classiquement comprise comme étant une notion relative définie suivant la direction verticale d'extension de la caisse par rapport au plan de roulage du véhicule.

Dans ce contexte, l'invention est reconnaissable en ce que :
- ) le projecteur est positionné sur le support suivant les trois directions du repère orthonormé via un organe d'assemblage entre le projecteur et le support. Le projecteur est fixé à une première de ses extrémités longitudinales à la caisse via un premier organe de fixation.
- ) le support est fixé à une première de ses extrémités longitudinales à la caisse via un deuxième organe de fixation disposé en contrebas du projecteur. Le support est configuré en bras de levier basculant à sa première extrémité longitudinale fixée à la caisse, en exerçant contre le projecteur entre ses extrémités longitudinales une poussée suivant au moins une composante d'effort verticale via un organe de soutien du projecteur dont est pourvu le support.
- ) le parechoc est fixé à la caisse et comporte une aile d'extension transversale qui est verticalement interposée entre le projecteur et le support à leur deuxième extrémité longitudinale. Ladite aile est logée à l'intérieur d'un passage ménagé entre le projecteur et le support via ledit organe de soutien.

Il est compris compte tenu de l'emplacement desdits composants sur la caisse, que la première extrémité longitudinale du projecteur et la première extrémité longitudinale du support sont orientées vers l'intérieur de la caisse. Inversement, la deuxième extrémité longitudinale du projecteur et la deuxième extrémité longitudinale du support, ainsi que le parechoc, sont orientées vers l'extérieur de la caisse. Tel que classiquement, le projecteur comprend une paroi transparente à travers laquelle émerge le faisceau lumineux produit par le projecteur, ladite paroi transparente présentant au moins une face longitudinalement orientée vers l'extérieur de la caisse à la deuxième extrémité du projecteur. Le projecteur est notamment fixé sur la caisse et assemblé au support via un boîtier qu'il comporte pour loger au moins une source lumineuse et au moins un dispositif optique produisant au moins un faisceau lumineux.

Le montage sur la caisse dudit ensemble de composants est ainsi procuré isostatique malgré d'une part l'assemblage en position entre le projecteur et le support et d'autre part entre le parechoc et le support, et cela malgré les fixations individuelles sur la caisse du projecteur, du support et du parechoc.

En outre, le maintien en position du projecteur contre la caisse et/ou la qualité d'un affleurement entre le parechoc et le projecteur à sa deuxième extrémité longitudinale sont confortés à l'encontre d'un basculement du projecteur qui est fixé sur la caisse via sa première extrémité longitudinale. De telles modalités de maintien en position du projecteur sur la caisse sont particulièrement utiles dans le cas où le projecteur est de conformation significativement allongée suivant la direction longitudinale d'extension de la caisse.

Il est aussi à relever qu'aux deuxièmes extrémités longitudinales du projecteur et du support entre lesquelles est verticalement interposée l'aile du parechoc, un pincement excessif des composants l'un contre l'autre est évité malgré le montage basculant du support sur la caisse générateur de ladite composante de poussée verticale, de par la formation dudit passage qui est verticalement délimité entre le projecteur et le support via ledit organe de soutien.

Le premier organe de fixation et le deuxième organe de fixation comprennent chacun au moins un doigt élastiquement déformable d'emboîtement longitudinal irréversible sur la caisse. Les doigts coopèrent par emboîtement avec des ouvertures respectives qui sont ménagées à travers au moins une paroi d'extension transversale que présentent un ou plusieurs éléments participants à la formation de la caisse, tel que par exemple une paroi délimitant un logement de réception du support et du projecteur et/ou par exemple encore une paroi d'un élément de caisse participant d'un côté latéral de la caisse.

Selon une forme de réalisation, le support comporte au moins un talon d'appui contre la caisse qui est pourvu dudit deuxième organe de fixation et qui s'étend entre les extrémités longitudinales du support. Le talon est intégré au support à sa deuxième extrémité longitudinale et est verticalement incliné en direction du projecteur depuis la première extrémité longitudinale du support.

Un jeu vertical de montage est de préférence ménagé entre le deuxième organe de fixation équipant le support et son emplacement de mise en prise sur la caisse, pour favoriser la mise sous contrainte élastique du support en basculement.

A titre indicatif, une valeur dudit jeu vertical de montage comprise entre 1 mm et 2 mm peut procurer ladite composante verticale de poussée d'une amplitude suffisante pour maintenir le projecteur en position à l'encontre de son basculement vertical sous l'effet de son propre poids, tout en limitant les contraintes supportées par le support pour soutenir le projecteur.

Selon une forme potentielle de réalisation, le support est pourvu d'un organe élastiquement déformable au moins en partie générateur de ladite composante d'effort verticale, qui est interposé entre la deuxième extrémité longitudinale du support et la caisse dans la zone de fixation du support à la caisse via le deuxième organe de fixation.

Selon l'invention, le deuxième organe de fixation est transversalement libre en mobilité sur la caisse en procurant une immobilisation de la première extrémité longitudinale du support longitudinalement et verticalement sur la caisse. La liberté de mobilité transversale du deuxième organe de fixation sur la caisse est notamment une liberté de glissement transversal du deuxième organe de fixation sur la caisse, notamment à travers une ouverture d'extension transversale que comporte la caisse pour le passage à son travers du deuxième organe de fixation. La liberté de mobilité transversale du deuxième organe de fixation sur la caisse est notamment d'une amplitude modérée qui est juste suffisante pour permettre le basculement du support en soutien du projecteur en limitant les contraintes que subies le support pour son montage basculant, le support étant précontraint par suite de sa fixation sur la caisse.

Selon une forme de réalisation, le premier organe de fixation comprend deux éléments de fixation du projecteur sur la caisse qui sont transversalement distants et verticalement décalés l'un par rapport à l'autre.

Selon une forme de réalisation, ledit organe de soutien du projecteur par le support est disposé en contrebas dudit premier organe de fixation du projecteur sur la caisse.

Selon une forme de réalisation, ledit organe d'assemblage entre le projecteur et le support est configuré en organe de crochetage du projecteur sur le support.

De préférence, le dit organe d'assemblage comprend au moins deux crochets transversalement distants équipant le projecteur et placés en prise par emboîtement sur le support.

Selon une forme de réalisation, ledit organe de soutien comprend au moins un plot s'étendant verticalement entre le support et le projecteur en ménageant entre eux le passage de réception de ladite aile du parechoc. De préférence, les plots sont au moins au nombre de deux et sont répartis sur le support à distance longitudinale les uns des autres.

L'invention a aussi pour objet un procédé de montage sur la caisse d'un véhicule automobile des composants d'au moins un dit ensemble de composants via un dispositif de montage conforme à l'invention. Le procédé de l'invention est reconnaissable en ce qu'il comprend les étapes suivantes :
- ) positionner et assembler entre eux le projecteur et le support via ledit organe d'assemblage, le projecteur étant en outre soutenu par le support via ledit organe de soutien ménageant entre eux ledit passage de réception du parechoc,
- ) fixer sur au moins un élément de caisse l'ensemble composé du projecteur et du support via ledit premier organe de fixation du projecteur sur la caisse et via ledit deuxième organe de fixation du support sur la caisse,
- ) installer le parechoc sur la caisse en plaçant ladite aile qu'il comporte en interposition verticale entre le support et le projecteur à leur deuxième extrémité longitudinale, et fixer le parechoc sur la caisse.

L'invention a aussi pour objet un véhicule automobile comprenant une caisse sur laquelle est montée au moins un dit ensemble de composants. Le véhicule de l'invention est reconnaissable en ce que les composants dudit au moins un ensemble de composants sont montés sur la caisse via un dispositif de montage conforme à l'invention.

L'invention est particulièrement utile lorsque le projecteur d'un dit ensemble de composants est un feu de signalisation de conformation allongée en étant équipé d'une paroi transparente à travers laquelle est prévu d'émerger au moins un faisceau lumineux, ladite paroi transparente présentant au moins une face de bout d'extension sensiblement verticale et transversale orientée longitudinalement vers l'extérieur du véhicule. La conformation allongée du projecteur favorise son esthétisme, notamment en ménageant une face de dessus de la paroi transparente à travers laquelle la lumière générée par le projecteur peut émerger vers l'extérieur du véhicule sensiblement verticalement et/ou latéralement. Ladite face de dessus de la paroi transparente s'étend essentiellement transversalement et verticalement, en étant de préférence sensiblement inclinée depuis la première extrémité du projecteur vers le bas de la caisse.

Plus particulièrement selon une forme de réalisation, le projecteur que comprend ledit au moins un ensemble de composants est un feu de signalisation latéral arrière, qui présente notamment une conformation allongée suivant la direction longitudinale d'extension de la caisse. Le véhicule est notamment équipé de deux dits feux de signalisation installés respectivement au côté latéral arrière droit et au côté latéral arrière gauche de la caisse, chacun via un dispositif de montage conforme à l'invention.

### Présentation des figures

L'invention sera mieux comprise à la lecture de la description détaillée qui suit d'un exemple de réalisation de la présente invention, en relation avec les figures suivantes :
[Fig. 1] La figure 1 est une vue schématique de profil d'un ensemble de composants installé sur la caisse d'un véhicule automobile via un dispositif de montage conforme à un exemple de réalisation de l'invention, suivant un plan vertical et horizontal d'extension de la caisse.
[Fig. 2] La figure 2 est une vue schématique de profil de l'ensemble de composants installé sur la caisse représentée sur la figure 1, suivant un plan vertical et transversal d'extension de la caisse.

### Description détaillée de l'invention

Les figures et leurs descriptions détaillées non limitatives, exposent l'invention selon des modalités particulières qui ne sont pas restrictives quant à la portée de l'invention telle que définie par les revendications. Les figures et leurs descriptions détaillées d'un exemple de réalisation de l'invention peuvent servir à mieux la définir, si besoin en relation avec la description générale qui vient d'en être faite.

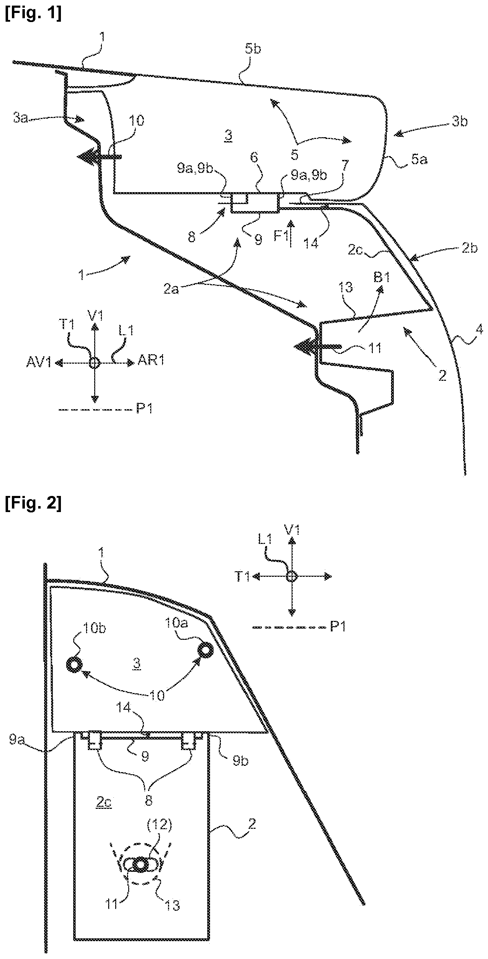

Sur la figure 1 et la figure 2, une caisse 1 de véhicule automobile s'étend suivant les trois directions d'un repère orthonormé communément identifiées par une direction longitudinale L1 s'étendant entre l'avant AV1 et l'arrière AR1 de la caisse 1, une direction transversale T1 s'étendant entre les côtés latéraux droit et gauche de la caisse 1 par rapport à la station du conducteur du véhicule, et une direction verticale V1 d'extension de la caisse 1 en élévation depuis le plan de roulage du véhicule au sol.

Un ensemble de composants comprenant un support 2 porteur d'un projecteur 3 et d'un parechoc 4, est monté sur la caisse 1. Selon l'exemple de réalisation illustré, ledit projecteur 3 est un feu de signalisation latéral arrière de conformation allongée comprenant un boîtier 6 muni d'une paroi transparente 5 pour l'émergence vers l'extérieur du véhicule de la lumière générée par le projecteur 3. La paroi transparente 5 présente une face de bout 5a du projecteur 3 qui est ménagée à une deuxième extrémité longitudinale 3b du projecteur 3 et qui est essentiellement orientée vers l'arrière AR1 de la caisse 1, et une face de dessus 5b essentiellement orientée vers l'extérieur de la caisse 1 verticalement V1 à l'opposé du plan de roulage du véhicule.

Dans le cadre de l'invention, il est évité un montage hyperstatique du dudit ensemble de composants sur la caisse 1 malgré la fixation individuelle sur la caisse 1 des composants 2, 3, 4 qu'il comprend. En outre, le projecteur 3 présente une conformation allongée suivant la direction longitudinale L1 et est fixé à la caisse 1 à l'une première de ses extrémités longitudinales 3a. Ceci présente un risque de basculement potentiel du projecteur 3 sous l'effet de son propre poids.

Les modalités de montage desdits composants sur la caisse 1 permettent d'accroître la surface technique de portée du projecteur 3 par la caisse 1 en exploitant la paroi inférieure du projecteur 3 pour son soutien par le support 2. Plus particulièrement selon l'invention, la surface technique ménagée par une paroi d'extrémité longitudinale 3a du projecteur 3 habituellement utilisée pour sa fixation en application contre la caisse 1, est complétée par une extension longitudinale L1 de la dite surface technique via le support 2.

Un tel complément de ladite surface technique de portée du projecteur 3 par la caisse 1, est notamment procuré par un soutien du projecteur 3 entre ses extrémités longitudinales 3a, 3b par le support 2 soumis à une contrainte génératrice d'une poussée comprenant une composante d'effort verticale F1 appliquée sous le projecteur 3, pour son soutien au plus proche de sa face de bout 5a orientée vers l'extérieur de la caisse 1. En outre, ladite composante d'effort verticale F1 favorise la qualité obtenue d'un affleurement vertical V1 entre la face de bout 5a du projecteur 3 et une aile 7 du parechoc 4 qui est logée à l'intérieur d'un passage 14 en étant interposée verticalement V1 entre le support 2 et le projecteur 3 à leur deuxième extrémité longitudinale 3b, 2b.

A cet effet, le projecteur 3 et le support 2 sont positionnés et assemblés entre eux via un organe d'assemblage 8, par exemple agencé en organe de crochetage entre le support 2 et le projecteur 3. En outre, le support 2 est muni d'un organe de soutien 9 du projecteur 3 disposé entre ses extrémités longitudinales 3a, 3b. Le projecteur 3 et le support 2 sont individuellement est fixé sur la caisse 1 à leurs premières extrémités longitudinales 3a, 2a respectives, via un premier organe de fixation 10 du projecteur 3 sur la caisse 1 et via un deuxième organe de fixation 11 du support 2 sur la caisse 1 disposé en contrebas du projecteur 3.

Le support 2 est configuré en organe basculant B1 à sa première extrémité longitudinale 2a fixée à la caisse 1, par sa mise en précontrainte entre le deuxième organe de fixation 11 et l'organe de soutien 9 qui sont longitudinalement L1 et verticalement V1 distants l'un de l'autre.

La mise en précontrainte du support 2 est génératrice de la dite poussée et donc de ladite composante d'effort verticale F1 participant au soutien du projecteur 3, à l'encontre de son basculement sous l'effet de son propre poids depuis sa deuxième extrémité longitudinale 3b.

A cet effet, le support 2 comporte un talon 13 d'appui à sa première extrémité longitudinale 2a contre un premier élément de caisse 1, via lequel talon 13 le support 2 est fixé à la caisse 1 par le deuxième organe de fixation 11. Ledit premier élément de caisse 1 est par exemple formé d'une tôle ménageant un logement de réception conjointement du projecteur 3 et du support 2. Le talon 13 s'étend entre les extrémités longitudinales 2a, 2b du support 2, en présentant une inclinaison vers le projecteur 3 depuis sa première extrémité longitudinale 2a.

Le talon 13 est intégré à une paroi de jonction 2c que comprend le support 2 à sa deuxième extrémité longitudinale 2b. La dite paroi de jonction 2c d'une part relie entre eux le talon 13 et l'organe de soutien 9 du projecteur 3, et d'autre part forme une paroi du support 2 contre laquelle le parechoc 4 est longitudinalement L1 accosté.

Plus particulièrement visible sur la figure 2, le deuxième organe de fixation 11 est transversalement T1 libre en mobilité sur la caisse 1, en procurant une immobilisation du support 2 longitudinalement L1 et verticalement V1 sur la caisse 1. Selon l'exemple illustré, le deuxième organe de fixation 11 est unique et est par exemple monté coulissant transversalement T1 à l'intérieur d'une lumière 12 ménagée à travers le premier élément de caisse 1.

La libre mobilité transversale T1 du deuxième organe de fixation 11 permet de contenir une déformation du support 2 sous l'effet de sa mise en précontrainte, tout en autorisant la génération de ladite composante d'effort verticale F1 à un seuil d'effort suffisant pour procurer le soutien du projecteur 3 à l'encontre de son basculement. De préférence, un jeu vertical de montage est ménagé entre le deuxième organe de fixation 11 et son emplacement de fixation sur la caisse 1, pour favoriser la mise sous précontrainte du support 2 en basculement B1.

Le premier organe de fixation 10 comprend deux éléments de fixation 10a, 10b du projecteur 3 sur la caisse 1 qui sont transversalement T1 distants et verticalement V1 décalés l'un par rapport à l'autre. Un premier élément de fixation 10a est affecté à la fixation du projecteur 3 sur le premier élément de caisse 1 et un deuxième élément de fixation 10b est affecté à la fixation du projecteur 3 sur un deuxième élément de caisse 1, notamment sur une paroi que comprend un élément de caisse 1 participant d'un côté latéral de la caisse 1. Le soutien forcé du projecteur 3 par le support 2 précontraint favorise notamment le placage du projecteur 3 contre le deuxième élément de caisse 1.

L'organe de soutien 9 comprend au moins une paire de plots 9a, 9b transversalement T1 distants l'un de l'autre. Selon l'exemple illustré, l'organe de soutien 9 comprend deux paires de plots 9a, 9b longitudinalement L1 distantes l'une de l'autre. Le deuxième organe de fixation 11 et le ou les éléments de fixation 10a, 10b que comprend le premier organe de fixation 10 sont de préférence chacun agencés en doigt élastiquement déformable d'emboîtement étanche et irréversible longitudinalement L1 sur la caisse 1.

## Revendications

1. Dispositif de montage isostatique d'au moins un ensemble de composants sur la caisse (1) d'un véhicule automobile, la caisse (1) s'étendant suivant les trois directions d'un repère orthonormé comprenant une direction longitudinale (L1), une direction transversale (T1) et une direction verticale (V1), les composants dudit au moins un ensemble de composants étant chacun fixés sur la caisse (1) et comprenant un support (2) de réception d'un projecteur (3) lumineux et d'un parechoc (4), le support (2) et le parechoc (4) s'étendant en contrebas du projecteur (3), le projecteur (3) étant positionné sur le support (2) suivant les trois directions (L1, T1, V1) du repère orthonormé via un organe d'assemblage (8) entre le projecteur (3) et le support (2), le projecteur (3) étant fixé à une première de ses extrémités longitudinales (3a) à la caisse (1) via un premier organe de fixation (10), le support (2) étant fixé à une première de ses extrémités longitudinales (2a) à la caisse (1) via un deuxième organe de fixation (11) disposé en contrebas du projecteur (3), et étant configuré en bras de levier basculant (B1) à sa première extrémité longitudinale (2a) fixée à la caisse (1) en exerçant contre le projecteur (3) entre ses extrémités longitudinales (3a, 3b) une poussée suivant au moins une composante d'effort verticale (F1) via un organe de soutien (9) du projecteur (3) dont est pourvu le support (2), le parechoc (4) étant fixé à la caisse (1) et comportant une aile (7) d'extension transversale (T1) qui est verticalement (V1) interposée entre le projecteur (3) et le support (2) à leur deuxième extrémité longitudinale (3b, 2b), ladite aile (7) étant logée à l'intérieur d'un passage (14) ménagé entre le projecteur (3) et le support (2) via ledit organe de soutien (9), **caractérisé en ce que** le deuxième organe de fixation (11) est transversalement (T1) libre en mobilité sur la caisse (1) en procurant une immobilisation de la première extrémité longitudinale (2a) du support (2) longitudinalement (L1) et verticalement (V1) sur la caisse (1).

2. Dispositif de montage selon la revendication 1, **caractérisé en ce que** le support (2) comporte au moins un talon (13) d'appui contre la caisse (1) qui est pourvu dudit deuxième organe de fixation (11) et qui s'étend entre les extrémités longitudinales (2a, 2b) du support (2), le talon (13) étant intégré au support (2) à sa deuxième extrémité longitudinale (2b) en étant verticalement (V1) incliné en direction du projecteur (3) depuis la première extrémité longitudinale (2a) du support (2).

3. Dispositif de montage selon l'une quelconque des revendications 1 à 2, **caractérisé en ce que** le premier organe de fixation (10) comprend deux éléments de fixation (10a, 10b) du projecteur (3) sur la caisse (1) qui sont transversalement (T1) distants et verticalement (V1) décalés l'un par rapport à l'autre.

4. Dispositif de montage selon l'une quelconque des revendications 1 à 3, **caractérisé en ce que** ledit organe de soutien (9) du projecteur (3) par le support (2) est disposé en contrebas dudit premier organe de fixation (10) du projecteur (3) sur la caisse (1).

5. Dispositif de montage selon l'une quelconque des revendications 1 à 4, **caractérisé en ce que** ledit organe d'assemblage (8) entre le projecteur (3) et le support (2) est configuré en organe de crochetage du projecteur (3) sur le support (2).

6. Dispositif de montage selon l'une quelconque des revendications 1 à 5, **caractérisé en ce que** ledit organe de soutien (9) comprend au moins un plot (9a, 9b) s'étendant verticalement (V1) entre le support (2) et le projecteur (3) en ménageant entre eux le passage (14) de réception de ladite aile (7) du parechoc (4).

7. Procédé de montage sur la caisse (1) d'un véhicule automobile des composants (2, 3, 4) d'au moins un dit ensemble de composants via un dispositif de montage selon l'une quelconque des revendications 1 à 6, **caractérisé en ce que** le procédé comprend les étapes suivantes :
- ) positionner et assembler entre eux le projecteur (3) et le support (2) via ledit organe d'assemblage (8), le projecteur (3) étant en outre soutenu par le support (2) via ledit organe de soutien (9) ménageant entre eux ledit passage (14) de réception du parechoc (4),
- ) fixer sur au moins un élément de caisse (1) l'ensemble composé du projecteur (3) et du support (2) via ledit premier organe de fixation (10) du projecteur (3) sur la caisse (1) et via ledit deuxième organe de fixation (11) du support (2) sur la caisse (1),
- ) installer le parechoc (4) sur la caisse (1) en plaçant ladite aile (7) qu'il comporte en interposition verticale (V1) entre le support (2) et le projecteur (3) à leur deuxième extrémité longitudinale (3b, 2b), et fixer le parechoc (4) sur la caisse (1).

8. Véhicule automobile comprenant une caisse (1) sur laquelle est montée au moins un dit ensemble de composants (2, 3, 4), **caractérisé en ce que** les composants (2, 3, 4) dudit au moins un ensemble de composants sont montés sur la caisse (1) via un dispositif de montage selon l'une quelconque des revendications 1 à 6.

9. Véhicule automobile selon la revendication 8, **caractérisé en ce que** le projecteur (3) que comprend ledit au moins un ensemble de composants (2, 3, 4) est un feu de signalisation latéral arrière.

## Patentansprüche

1. - Vorrichtung zur isostatischen Montage von mindestens einer Gruppe von Komponenten auf der Karosserie (1) eines Kraftfahrzeugs, wobei sich die Karosserie (1) in den drei Richtungen eines orthonormierten Koordinatensystems erstreckt, das eine Längsrichtung (L1), eine Querrichtung (T1) und eine vertikale Richtung (V1) umfasst, wobei die Komponenten der mindestens einen Gruppe von Komponenten jeweils an der Karosserie (1) befestigt sind und einen Träger (2) zur Aufnahme eines leuchtenden Scheinwerfers (3) und eines Stoßfängers (4) umfassen, wobei sich der Träger (2) und die Stoßstange (4) unterhalb des Scheinwerfers (3) erstrecken, wobei der Scheinwerfer (3) auf dem Träger (2) in den drei Richtungen (L1, T1, V1) des orthonormalen Koordinatensystems über ein Montageorgan (8) zwischen dem Scheinwerfer (3) und dem Träger (2) positioniert ist, wobei der Scheinwerfer (3) an einem ersten seiner Längsenden (3a) über ein erstes Befestigungsorgan (10) an der Karosserie (1) befestigt ist, wobei der Träger (2) an einem ersten seiner Längsenden (2a) über ein zweites Befestigungsorgan (11), das unterhalb des Scheinwerfers (3) angeordnet ist, an der Karosserie (1) befestigt ist, und an seinem ersten, an der Karosserie (1) befestigten Längsende (2a) als Kipphebelarm (B1) ausgebildet ist, indem er gegen den Scheinwerfer (3) zwischen seinen Längsenden (3a, 3b) einen Schub ausübt, der mindestens einer vertikalen Kraftkomponente (F1) folgt, über ein Stützorgan (9) des Scheinwerfers (3), mit dem der Träger (2) versehen ist, wobei der Stoßfänger (4) an der Karosserie (1) befestigt ist und einen Flügel (7) mit Querausdehnung (T1) aufweist, der vertikal (V1) zwischen dem Scheinwerfer (3) und dem Träger (2) an ihrem zweiten Längsende (3b, 2b), wobei der Flügel (7) im Inneren eines Durchgangs (14) untergebracht ist, der zwischen dem Projektor (3) und dem Träger (2) über das Stützorgan (9) vorgesehen ist, **dadurch gekennzeichnet, dass** das zweite Befestigungsorgan (11) quer (T1) frei beweglich an der Karosserie (1) ist, indem es eine Immobilisierung des ersten Längsendes (2a) des Trägers (2) in Längsrichtung (L1) und in vertikaler Richtung (V1) an der Karosserie (1) bewirkt.

2. - Montagevorrichtung nach Anspruch 1, **dadurch gekennzeichnet, dass** der Träger (2) mindestens einen Absatz (13) zur Anlage an der Karosserie (1) aufweist, der mit dem zweiten Befestigungsorgan (11) versehen ist und sich zwischen den Längsenden (2a, 2b) des Trägers (2) erstreckt, wobei der Absatz (13) an seinem zweiten Längsende (2b) in den Träger (2) integriert ist, indem er vom ersten Längsende (2a) des Trägers (2) aus vertikal (V1) in Richtung des Scheinwerfers (3) geneigt ist.

3. - Montagevorrichtung nach einem der Ansprüche 1 bis 2, **dadurch gekennzeichnet, dass** das erste Befestigungsorgan (10) zwei Elemente (10a, 10b) zur Befestigung des Scheinwerfers (3) an der Karosserie (1) umfasst, die in Querrichtung (T1) voneinander beabstandet und in vertikaler Richtung (V1) gegeneinander versetzt sind.

4. - Montagevorrichtung nach einem der Ansprüche 1 bis 3, **dadurch gekennzeichnet, dass** das Organ (9) zum Abstützen des Projektors (3) durch den Träger (2) unterhalb des ersten Organs (10) zur Befestigung des Projektors (3) an der Karosserie (1) angeordnet ist.

5. - Montagevorrichtung nach einem der Ansprüche 1 bis 4, **dadurch gekennzeichnet, dass** das Verbindungsorgan (8) zwischen dem Projektor (3) und dem Träger (2) als Organ zum Einhaken des Projektors (3) an dem Träger (2) ausgebildet ist.

6. - Montagevorrichtung nach einem der Ansprüche 1 bis 5, **dadurch gekennzeichnet, dass** das Stützorgan (9) mindestens einen Klotz (9a, 9b) umfasst, der sich vertikal (V1) zwischen dem Träger (2) und dem Scheinwerfer (3) erstreckt und zwischen ihnen den Durchgang (14) zur Aufnahme des Flügels (7) des Stoßfängers (4) freilässt.

7. - Verfahren zur Montage der Komponenten (2, 3, 4) mindestens einer der genannten Komponentengruppe an der Karosserie (1) eines Kraftfahrzeugs über eine Montagevorrichtung nach einem der Ansprüche 1 bis 6, **dadurch gekennzeichnet, dass** das Verfahren die folgenden Schritte umfasst:
- ) Positionieren und Zusammenbauen des Scheinwerfers (3) und des Trägers (2) über das Montageorgan (8), wobei der Scheinwerfer (3) außerdem durch den Träger (2) über das Stützorgan (9) gestützt wird, das zwischen ihnen den Durchgang (14) zur Aufnahme des Stoßfängers (4) freilässt,
- ) Befestigen der aus dem Scheinwerfer (3) und der Halterung (2) bestehenden Einheit an mindestens einem Karosserieelement (1) über das erste Befestigungsorgan (10) des Scheinwerfers (3) an der Karosserie (1) und über das zweite Befestigungsorgan (11) der Halterung (2) an der Karosserie (1),
- ) Anbringen des Stoßfängers (4) an der Karosserie (1), indem der Flügel (7), den er umfasst, in vertikaler Zwischenposition (V1) zwischen dem Träger (2) und dem Scheinwerfer (3) an ihrem zweiten Längsende (3b, 2b) angeordnet wird, und Befestigen des Stoßfängers (4) an der Karosserie (1).

8. - Kraftfahrzeug mit einer Karosserie (1), an der mindestens ein so genannter Satz von Bauteilen (2, 3, 4) montiert ist, **dadurch gekennzeichnet, dass** die Bauteile (2, 3, 4) des mindestens einen Satzes von Bauteilen über eine Montagevorrichtung nach einem der Ansprüche 1 bis 6 an der Karosserie (1) montiert sind.

9. - Kraftfahrzeug nach Anspruch 8, **dadurch gekennzeichnet, dass** der Scheinwerfer (3), den der mindestens eine Satz von Komponenten (2, 3, 4) umfasst, eine hintere Seitenmarkierungsleuchte ist.

## Claims

1. Device for the isostatic mounting of at least one set of components on the body (1) of a motor vehicle, the body (1) extending in the three directions of an orthonormal reference frame comprising a longitudinal direction (L1), a transverse direction (T1) and a vertical direction (V1), the components of the said at least one set of components each being fixed to the body (1) and comprising a support (2) for receiving a luminous headlamp (3) and a bumper (4), **characterised in that** the support (2) and the bumper (4) extend below the headlamp (3), the headlamp (3) being positioned on the support (2) in the three directions (L1, T1, V1) of the orthonormal reference frame, the support (2) and the bumper (4) extending below the headlamp (3), the headlamp (3) being positioned on the support (2) in the three directions (L1, T1, V1) of the orthonormal reference frame via an assembly member (8) between the headlamp (3) and the support (2), the headlamp (3) being fixed at a first of its longitudinal ends (3a) to the body (1) via a first fixing member (10), the support (2) being fixed at a first of its longitudinal ends (2a) to the body (1) via a second fixing member (11) arranged below the headlamp (3), and being configured as a tilting lever arm (B1) at its first longitudinal end (2a) fixed to the body (1) by exerting a thrust against the headlamp (3) between its longitudinal ends (3a, 3b) in accordance with at least one vertical force component (F1) via a support member (9) for the headlamp (3) provided on the support (2), the bumper (4) being fixed to the body (1) and comprising a transversely extending (T1) wing (7) which is vertically (V1) interposed between the headlamp (3) and the support (2) at their second longitudinal end (3b, 2b), the said wing (7) being housed inside a passage (14) formed between the headlamp (3) and the support (2) via the said support member (9), **characterised in that** the second fixing member (11) is free to move transversely (T1) on the body (1), immobilising the first longitudinal end (2a) of the support (2) longitudinally (L1) and vertically (V1) on the body (1).

2. - Mounting device according to claim 1, **characterised in that** the support (2) comprises at least one heel (13) for bearing against the body (1) which is provided with said second fixing member (11) and which extends between the longitudinal ends (2a, 2b) of the support (2), the heel (13) being integrated into the support (2) at its second longitudinal end (2b), being vertically (V1) inclined towards the headlamp (3) from the first longitudinal end (2a) of the support (2).

3. - Mounting device according to any one of claims 1 to 2, **characterised in that** the first fixing member (10) comprises two elements (10a, 10b) for fixing the headlamp (3) to the body (1) which are transversely (T1) spaced apart and vertically (V1) offset with respect to each other.

4. - Mounting device according to any one of claims 1 to 3, **characterised in that** the said member (9) for supporting the headlamp (3) by the support (2) is disposed below the said first member (10) for fixing the headlamp (3) to the body (1).

5. - Mounting device according to any one of claims 1 to 4, **characterised in that** the said assembly member (8) between the headlamp (3) and the support (2) is configured as a member for hooking the headlamp (3) onto the support (2).

6. - Mounting device according to any one of claims 1 to 5, **characterised in that** the said support member (9) comprises at least one stud (9a, 9b) extending vertically (V1) between the support (2) and the headlight (3), leaving between them the passage (14) for receiving the said wing (7) of the bumper (4).

7. - Method of mounting on the body (1) of a motor vehicle the components (2, 3, 4) of at least one said set of components via a mounting device according to any one of claims 1 to 6, **characterised in that** the method comprises the following steps:
- ) positioning and assembling together the headlamp (3) and the support (2) via the said assembly member (8), the headlamp (3) also being supported by the support (2) via the said support member (9) providing between them the said passage (14) for receiving the bumper (4),
- ) fixing the assembly comprising the headlamp (3) and the support (2) to at least one body element (1) via said first member (10) for fixing the headlamp (3) to the body (1) and via said second member (11) for fixing the support (2) to the body (1),
- ) installing the bumper (4) on the body (1) by placing the said wing (7) that it comprises in vertical interposition (V1) between the support (2) and the headlamp (3) at their second longitudinal end (3b, 2b), and fixing the bumper (4) to the body (1).

8. - Motor vehicle comprising a body (1) on which at least one said set of components (2, 3, 4) is mounted, **characterised in that** the components (2, 3, 4) of said at least one set of components are mounted on the body (1) via a mounting device according to any one of claims 1 to 6.

9. - Motor vehicle according to claim 8, **characterised in that** the headlamp (3) which the said at least one assembly of components (2, 3, 4) comprises is a rear side signalling lamp.
